# EUROPEAN PATENT APPLICATION

(11) **EP 4 715 963 A2**
(43) Date of publication of application: **25.03.2026**
(21) Application number: 25194500.2
(22) Date of filing: 07.08.2025
(51) Int. Cl.: H01M 10/617, H01M 10/654, H01M 10/6551, H01M 50/119, H01M 50/122, H01M 50/124, H01M 50/477, H01M 50/486, H01M 50/497, H01M 50/474, H01M 50/48, H01M 50/548

(54) **BATTERY AND BATTERY MANUFACTURING METHOD**

(30) Priority: 30.08.2024 JP 2024150327
(71) Applicant: TOYOTA JIDOSHA KABUSHIKI KAISHA, Toyota-shi, Aichi-ken 471-8571 (JP)
(72) Inventor: KAKISHITA, Kenichi, Toyota-shi, Aichi-ken,, 471-8571 (JP); KAGAMI, Ryo, Toyota-shi, Aichi-ken,, 471-8571 (JP); HAGIWARA, Hideki, Toyota-shi, Aichi-ken,, 471-8571 (JP)
(74) Representative: Winter, Brandl - Partnerschaft mbB

(57) **Abstract**

A battery of the present disclosure has an electrode body, a case accommodating the electrode body, and a resin body electrically insulating the electrode body and the case. The electrode body includes a positive electrode current collector, a positive electrode active material layer, an electrolyte, a negative electrode active material layer and a negative electrode current collector. The case includes a metal tube having a first opening and a second opening, and covers that seal the first opening and the second opening respectively. The resin body includes plural concave regions extending from the first opening toward the second opening.

## Description

### BACKGROUND

### Technical Field

The present disclosure relates to a battery and a battery manufacturing method.

### Related Art

International Publication No. 2020/004135 discloses a non-aqueous electrolyte secondary battery (hereinafter also called "battery"). This battery has a case main body that is tubular, a sealing body, and a roll-type electrode group (hereinafter also called "electrode body"). The case main body has an opening portion and a bottom portion. The sealing body is fixed to the opening portion of the case main body by swaging with a gasket interposed therebetween. The electrode group is stored in the case main body. In the electrode group, positive electrode plate and negative electrode plate are rolled with a separator interposed therebetween. A metal foil collector of one electrode plate of the positive electrode plate and the negative electrode plate is exposed at at least part of the outermost circumferential surface of the electrode group in the rolling direction. The collector contacts the inner side surface of the case main body. Arithmetic mean roughness Ra1 of a first region and arithmetic mean roughness Ra2 of a second region satisfy Ra1 < Ra2. The first region is, of the inner surface of the case main body, the range from the opening portion side edge to the position of contact with the bottom portion side edge of the gasket. The second region is, of the inner surface of the case main body, the range opposing the outermost circumferential surface of the electrode group.

### SUMMARY

When the battery is used (i.e., when charging or discharging of the battery is carried out), it is easy for the electrode body to generate heat. In order to efficiently cool the electrode body, it is preferable to thermally connect a cooling mechanism and the case. In order to thermally connect a cooling mechanism and the case, it is preferable that the electrode body and the case be electrically insulated.

However, when the battery is used in a case in which a resin is filled between the electrode body and the case, the temperature of the electrode body (hereinafter also called "usage temperature") may differ locally. If the difference between the usage temperature of the first region of the electrode body and the usage temperature of the second region of the electrode body (hereinafter also called "usage temperature difference within the electrode body") is large, there is the concern that the durability of the battery will deteriorate. Therefore, in a battery in which the electrode body and the case are electrically insulated, there is the need for the usage temperature difference within the electrode body to be small.

The present disclosure was made in view of the above-described circumstances. It is a problem to be solved by an embodiment of the present disclosure to provide a battery and a battery manufacturing method in which, in a battery in which an electrode body and a case are electrically insulated, the usage temperature difference within the electrode body is small.

The following embodying aspects are included as means for addressing the above-described topic.
<1> A battery of a first aspect of the present disclosure is a battery including:
   an electrode body including a positive electrode current collector, a positive electrode active material layer, an electrolyte, a negative electrode active material layer and a negative electrode current collector;
   a case accommodating the electrode body; and
   a resin body electrically insulating the electrode body and the case,
   wherein:
      the case includes a metal tube having a first opening and a second opening, and covers that close the first opening and the second opening respectively, and
      the resin body includes plural concave regions extending from the first opening toward the second opening.

In the present disclosure, "electrolyte" means a substance that is interposed between the positive electrode active material layer and the negative electrode active material layer and conducts carrier ions. Specifically, examples of the electrolyte are solid electrolytes, non-aqueous electrolyte liquids containing a lithium salt (e.g., LiPF₆), non-aqueous gel electrolyte liquids, and ion-conductive polymers. "Positive electrode active material layer" means a layer containing a positive electrode active material. "Negative electrode active material layer" means a layer containing a negative electrode active material. "Resin body" means a body that contains a resin and is electrically insulating. The electrical resistance of the resin body may be greater than or equal to 10¹⁰ Ω•m. "Metal tube" means a metal container that is tubular. "Concave region" means, at the battery, a region of the case-side surface of the resin body which region does not physically contact the case.

In the first aspect, the resin body has the plural concave regions that extend from the first opening of the metal tube toward the second opening of the metal tube. Namely, the resin body has regions that do not contact the metal tube (namely, the concave regions) (hereinafter also called "non-contacting regions"), and regions that contact the metal tube (hereinafter also called "contacting regions"). At the non-contacting regions, the resin body and air are interposed between the resin body and the metal tube. Therefore, at the non-contacting regions, it is difficult for the heat of the electrode body to move to the metal tube. At the contacting regions, the resin body is interposed, and air is not interposed, between the resin body and the metal tube. Therefore, at the contacting regions, it is easy for the heat of the electrode body to move to the metal tube. The positions of the plural concave regions can be adjusted appropriately in accordance with the structure of the electrode body. As a result, the battery of the first aspect is a battery in which, in a battery in which an electrode body and the case are electrically insulated, the usage temperature difference at the interior of the electrode body is small.

<2> A battery of a second aspect of the present disclosure is the battery of above <1>, wherein:
a first proportion is greater than a second proportion,
the first proportion is a proportion of a total surface area of the plural concave regions at a region of the resin body which is at a first opening side, with respect to a surface area of the region at the first opening side, and
the second proportion is a proportion of a total surface area of the plural concave regions at a region of the resin body which is at a second opening side, with respect to a surface area of the region at the second opening side.

The electrode body may include an electrode main body, and collector tabs that are electrically connected to the electrode main body. The "region of the resin body which is at a first opening side" is, of the region of the resin body which region faces the electrode main body, the region between the edge at the first opening side and a position that is apart from the edge at the first opening side by a specific distance toward the second opening side along the axial direction. The "axial direction" means the direction heading from the first opening of the metal tube toward the second opening of the metal tube. "Specific distance" means a length that is one-tenth of the entire length in the axial direction of the region, which faces the electrode main body, of the resin body. The "region of the resin body which is at a second opening side" is, of the region of the resin body which region faces the electrode main body of the electrode body, the region between the edge at the second opening side and a position that is apart from the edge at the second opening side by the specific distance toward the first opening side along the axial direction.

In the second aspect, the first proportion is higher than the second proportion.

Namely, it is easier for the heat of the region at the second opening side of the electrode body to move to the metal tube than the heat of the region at the first opening side of the electrode body. As a result, in the battery of the second aspect, the cooling performance of the region at the second opening side of the electrode body is excellent.

<3> A battery of a third aspect of the present disclosure is the battery of above <1> or <2>, wherein the plural concave regions include tapered concave regions having widths that become narrower from the first opening toward the second opening.

In the third aspect, the plural concave regions include tapered concave regions.

Namely, it is easier for the heat of the region at the second opening side of the electrode body to move to the metal tube than the heat of the region at the first opening side of the electrode body. As a result, in the battery of the third aspect, the cooling performance of the region at the second opening side of the electrode body is excellent.

<4> A battery of a fourth aspect of the present disclosure is the battery of any one of above <1> through <3>, wherein the electrode body further includes:
plural negative electrode current collector tabs electrically connected to the negative electrode current collector and extending toward the first opening side, and
plural positive electrode current collector tabs electrically connected to the positive electrode current collector and extending toward the second opening side, and
a number of the negative electrode current collector tabs is greater than a number of the positive electrode current collector tabs.

Depending on the use of the battery, there are cases in which it is easier for the positive electrode current collector tabs to generate heat than the negative electrode current collector tabs. In the fourth aspect, the number of the negative electrode current collector tabs that extend toward the first opening side is greater than the number of positive electrode current collector tabs that extend toward the second opening side. Namely, in the fourth aspect, the positive electrode current collector tabs at which it is easy for heat to be generated are disposed at the second opening side at which it is easy for heat to be transferred, and the negative electrode current collector tabs at which it is difficult for heat to be generated are disposed at the first opening side at which it is difficult for heat to be transferred. As a result, the battery of the fourth aspect is a battery in which the usage temperature difference at the interior of the electrode body is even smaller.

<5> A battery of a fifth aspect of the present disclosure is the battery of any one of above <1> through <4>, wherein the metal tube includes, at an inner surface of the metal tube, plural convex portions contacting the resin body.

Due thereto, it is easier for the resin body to be fixed to the metal tube than in a structure in which the metal tube does not have the plural convex portions. As a result, in the battery of the fifth aspect, the electrode body is restrained by the metal tube.

<6> A battery of a sixth aspect of the present disclosure is the battery of above <5>, wherein:
the resin body includes a resin sheet having the plural concave regions, and
a height of the convex portions is less than or equal to 3/4 of a thickness of the resin sheet and is greater than or equal to 10 µm.

Due thereto, it is easier for the resin body to be fixed to the metal tube than in a structure in which the height of the convex portions is less than or equal to 3/4 of the thickness of the resin sheet and is not greater than or equal to 10 µm. As a result, in the battery of the sixth aspect, the electrode body is more strongly restrained by the metal tube.

<7> A battery manufacturing method of the present disclosure is a method of manufacturing the battery of above <4>, wherein
the resin body includes a resin sheet having the plural concave regions, and the method includes:
preparing an electrode body with a resin sheet, which has the electrode body and the resin sheet mounted to the electrode body; and
inserting the electrode body with a resin sheet into the first opening of the metal tube from a positive electrode current collector tab side, and placing the electrode body with a resin sheet at an interior of the metal tube.

The battery manufacturing method of the seventh aspect can efficiently manufacture the battery of the fourth aspect.

In accordance with the present disclosure, there are provided a battery and a battery manufacturing method in which, in a battery in which an electrode body and a case are electrically insulated, the usage temperature difference within the electrode body is small.

### BRIEF DESCRIPTION OF THE DRAWINGS

Exemplary embodiments of the present disclosure will be described in detail based on the following figures, wherein:
Fig. 1 is an external perspective view of a battery of a first embodiment;
Fig. 2 is a cross-sectional view of the battery of the first embodiment along line II-II of Fig. 1;
Fig. 3 is a cross-sectional view of the battery of the first embodiment along line III-III of Fig. 1;
Fig. 4 is a cross-sectional view of the battery of the first embodiment along line IV-IV of Fig. 1;
Fig. 5 is an external perspective view of an electrode body with resin sheets of the first embodiment;
Fig. 6 is a cross-sectional view of an electrode body of the first embodiment along line II-II of Fig. 1;
Fig. 7 is a cross-sectional view of the electrode body of the first embodiment along line III-III of Fig. 1; and
Fig. 8 is an external perspective view of an electrode body with resin sheets of a second embodiment.

### DETAILED DESCRIPTION

In the present disclosure, numerical value ranges expressed by using "-" mean ranges in which the numerical values listed before and after the "-" are included as the minimum value and maximum value, respectively. In numerical value ranges that are expressed in a stepwise manner in the present disclosure, the maximum value or the minimum value listed in a given numerical value range may be substituted by the maximum value or the minimum value of another numerical value range that is expressed in a stepwise manner. In the present disclosure, combinations of two or more preferred aspects are more preferable aspects. In the present disclosure, "step" is not only an independent step and includes steps that, even in a case in which that step cannot be clearly distinguished from another step, achieve the intended object of that step.

Embodiments of a battery of the present disclosure are described hereinafter with reference to the drawings. In the drawings, portions that are the same or equivalent are denoted by the same reference numerals, and description thereof is not repeated.

### (1) First Embodiment

### (1.1) Battery

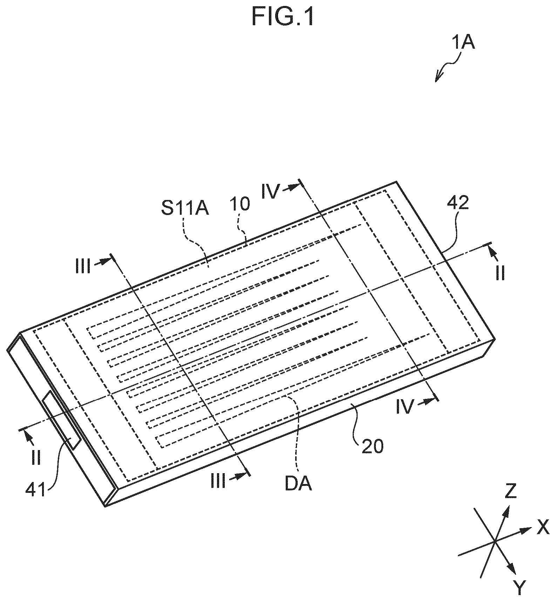

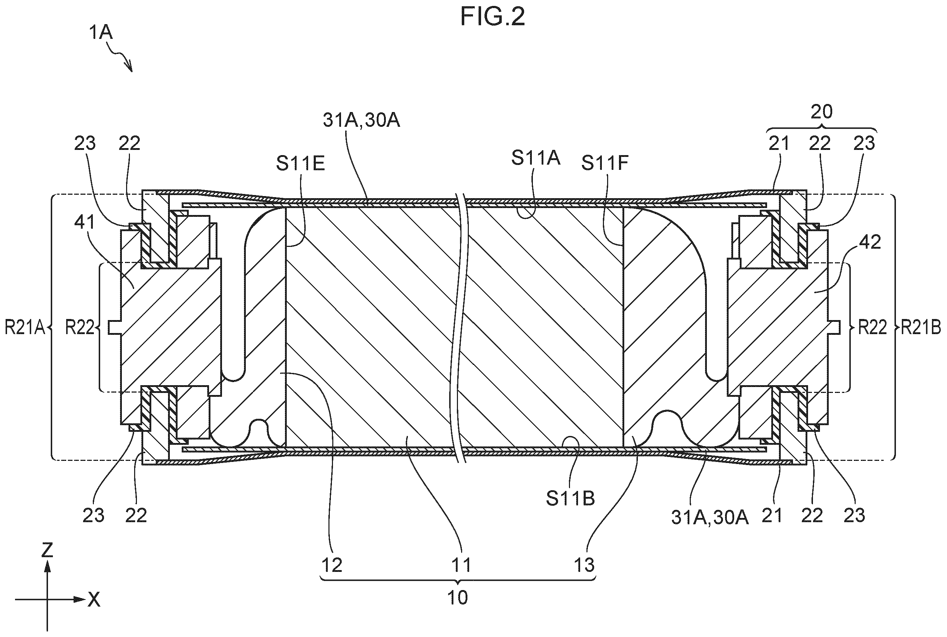

A battery 1A of a first embodiment is a solid-state battery. As illustrated in Fig. 1, the battery 1A has an electrode body 10, a case 20, a resin body 30A (see Fig. 2), a negative electrode terminal 41 (see Fig. 2), and a positive electrode terminal 42 (see Fig. 2). The electrode body 10 is a rectangular parallelopiped object.

In the first embodiment, the longitudinal direction of first main surface S11A of the electrode body 10 is prescribed as the X-axis direction. The short-side direction of the first main surface S11A of the electrode body 10 is prescribed as the Y-axis direction. The thickness direction of the electrode body 10 is prescribed as the Z-axis direction. The X-axis, the Y-axis and the Z-axis respectively are orthogonal to one another. The X-axis direction is an example of the axial direction. Note that these directions do not limit the orientations at the time when the battery of the present disclosure is used.

The negative electrode terminal 41, the electrode body 10 and the positive electrode terminal 42 are disposed in that order along the X-axis positive direction. The negative electrode terminal 41 and the positive electrode terminal 42 respectively are electrically connected to the electrode body 10. The resin body 30A is interposed between the electrode body 10 and the case 20. The electrode body 10 and the resin body 30A are sealed by the case 20, the negative electrode terminal 41 and the positive electrode terminal 42.

### (1.1.1) Electrode Body

### The electrode body 10 functions as the power generating element of the battery 1A.

As illustrated in Fig. 2, the electrode body 10 has an electrode main body 11, plural negative electrode current collector tabs 12 and plural positive electrode current collector tabs 13. The plural negative electrode current collector tabs 12 and the plural positive electrode current collector tabs 13 are electrically connected to the electrode main body 11.

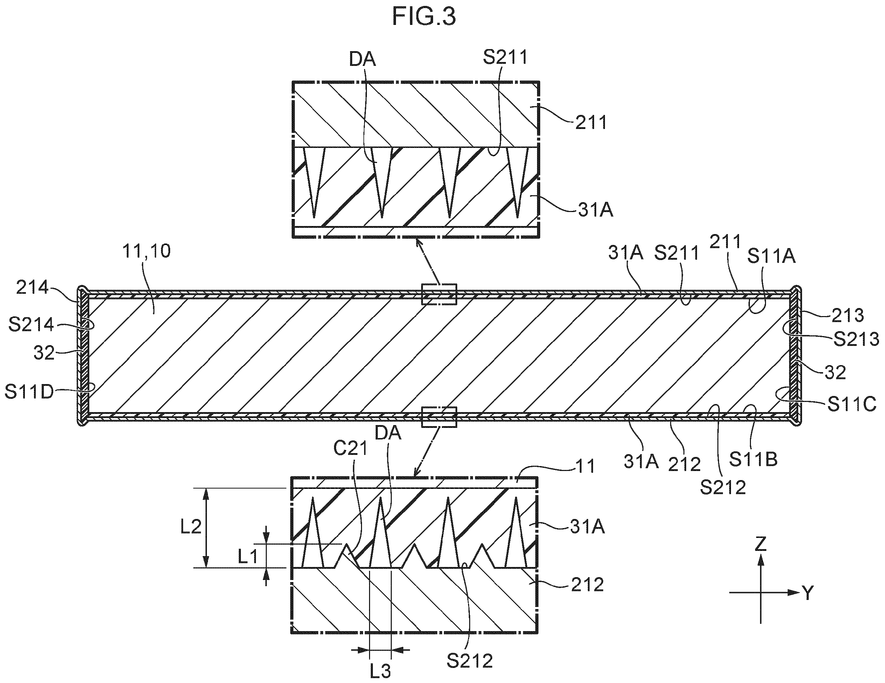

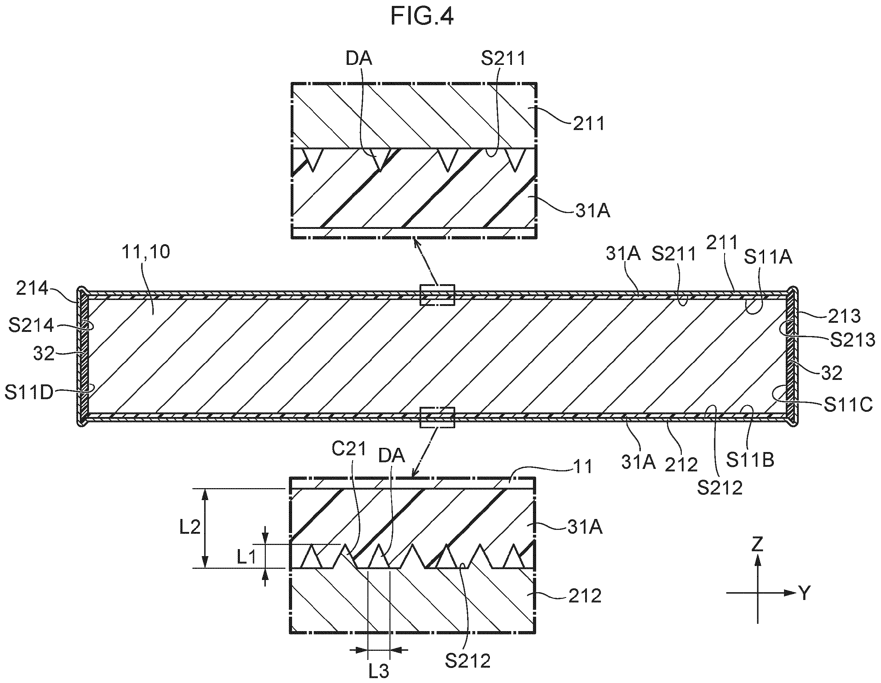

The electrode main body 11 is a rectangular parallelopiped object. As illustrated in Fig. 3 and Fig. 4, the electrode main body 11 has the first main surface S11A, a second main surface S11B, a first side surface S11C, a second side surface S11D, a third side surface S11E (see Fig. 2) and a fourth side surface S11F (see Fig. 2). The first main surface S11A faces the second main surface S11B in the Z-axis direction. The first side surface S11C faces the second side surface S11D in the Y-axis direction. The third side surface S11E faces the fourth side surface S11F in the X-axis direction. The first main surface S11A is connected continuously with the first side surface S11C, the second side surface S11D, the third side surface S11E and the fourth side surface S11F. The second main surface S11B is connected continuously with the first side surface S11C, the second side surface S11D, the third side surface S11E and the fourth side surface S11F.

Details of the electrode body 10 are described later.

### (1.1.2) Case

The case 20 accommodates the electrode body 10.

As illustrated in Fig. 2, the case 20 has a metal tube 21, a pair of covers 22 and electrically insulating bodies 23. The metal tube 21 has first opening R21A and second opening R21B. One of the pair of covers 22 closes the first opening R21A of the metal tube 21. The other of the pair of covers 22 closes the second opening R21B of the metal tube 21. The pair of covers 22 are welded to the metal tube 21. The electrically insulating bodies 23 are interposed between the negative electrode terminal 41 and the positive electrode terminal 42, and the covers 22, respectively.

### (1.1.2.1) Metal Tube

In the first embodiment, as illustrated in Fig. 3 and Fig. 4, the metal tube 21 is a rectangular tube. The metal tube 21 has a hollow portion. The hollow portion extends along the X-axis direction. The first opening R21A communicates with the second opening R21B via the hollow portion. The first opening R21A faces the second opening R21B in the X-axis direction. The first opening R21A is positioned in the X-axis negative direction with respect to the second opening R21B.

The metal tube 21 has a first wall portion 211, a second wall portion 212, a third wall portion 213 and a fourth wall portion 214. The first wall portion 211 faces the first main surface S11A of the electrode main body 11. The second wall portion 212 faces the second main surface S11B of the electrode main body 11. The third wall portion 213 faces the first side surface S11C of the electrode main body 11. The fourth wall portion 214 faces the second side surface S11D of the electrode main body 11. The first wall portion 211 is connected continuously with the third wall portion 213 and the fourth wall portion 214. The second wall portion 212 is connected continuously with the third wall portion 213 and the fourth wall portion 214.

In the first embodiment, inner surface S212 of the second wall portion 212 of the metal tube 21 has plural convex portions C21 that contact the resin body 30A. The plural convex portions C21 may be disposed regularly or may be disposed irregularly.

In the first embodiment, height L1 of the convex portions C21 (the length of the convex portions C21 in the Z-axis direction) (see Fig. 3) is not particularly limited, and is preferably less than or equal to 3/4 of thickness L2 (see Fig. 3) of a resin sheet 31A and greater than or equal to 10 µm. The height L1 of the convex portions C21 may be greater than or equal to 3/4 of the thickness L2 of the resin sheet 31A. The height L1 of the convex portions C21 may be less than or equal to 10 µm. Surface roughness (Ra) of the inner surface S212 of the second wall portion 212 may be 10 µm - 50 µm. The thickness L2 of the resin sheet 31A may be 10 µm - 300 µm.

In the first embodiment, inner surface S211 of the first wall portion 211 of the metal tube 21, inner surface S213 of the third wall portion 213, and inner surface S214 of the fourth wall portion 214 respectively are flat surfaces. In other words, the inner surface S211, the inner surface S213 and the inner surface S214 respectively do not have the convex portions C21.

The material of the metal tube is a metal (e.g., aluminum, copper, stainless steel (SUS) or nickel).

### (1.1.2.2) Covers

The covers 22 are plate-shaped objects. As illustrated in Fig. 2, the cover 22 has one through-hole R22 extending in the X-axis direction. The negative electrode terminal 41 is exposed from the through-hole R22 of one of the pair of covers 22. The positive electrode terminal 42 is exposed from the through-hole R22 of the another of the pair of covers 22. The material of the covers is a metal (e.g., aluminum, copper, stainless steel (SUS) or nickel).

### (1.1.2.3) Electrically Insulating Bodies

The electrically insulating bodies 23 prevent electrical contact between the negative electrode terminal 41 and the positive electrode terminal 42, respectively, and the covers 22. The shape of the electrically insulating bodies 23 is not particularly limited provided that it is a shape such that the electrically insulating bodies 23 are interposed between the negative electrode terminal 41 and the positive electrode terminal 42, respectively, and the covers 22. The material of the electrically insulating bodies may be a known resin (a thermoplastic resin or a thermosetting resin or the like). The thermoplastic resin may be an elastomer.

### (1.1.3) Resin Body

The resin body 30A electrically insulates the electrode body 10 and the case 20.

The resin body 30A has a pair of the resin sheets 31A and a pair of resin filling bodies 32. As illustrated in Fig. 2, one of the pair of resin sheets 31A is disposed on the first main surface S11A of the electrode main body 11. The another of the pair of resin sheets 31A is disposed on the second main surface S11A of the electrode main body 11. As illustrated in Fig. 3, one of the pair of resin filling bodies 32 is disposed on the first side surface S11C of the electrode main body 11. The another of the pair of resin filling bodies 32 is disposed on the second side surface S11D of the electrode main body 11. The resin sheets 31A and the resin filling bodies 32 may be welded or may not be welded.

### (1.1.3.1) Resin Sheets

The resin sheets 31A prevent electrical contact between the electrode body 10 and the case 20. The pair of resin sheets 31A cover the entireties of the first main surface S11A and the second main surface S11B of the electrode main body 11.

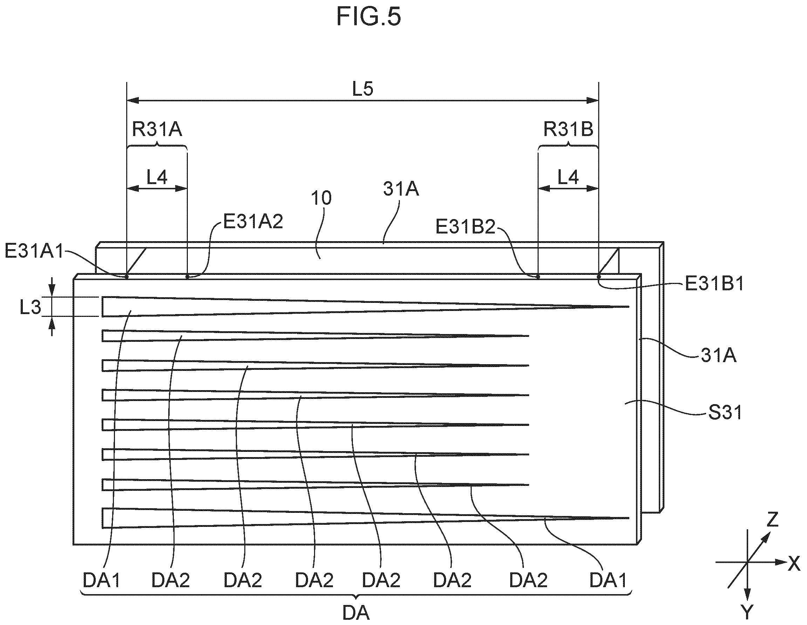

The resin sheets 31A are sheet-shaped objects. As illustrated in Fig. 5, the resin sheet 31A has plural concave regions DA in a surface S31 that physically contacts the metal tube 21. The plural concave regions DA extend from the first opening R21A of the metal tube 21 toward the second opening R21B of the metal tube 21 (i.e., in the X-axis positive direction). The plural concave regions DA do not physically contact the metal tube 21.

The regions of the resin sheet 31A that are not the plural concave regions DA are flat regions. At least some of the flat regions of the resin sheet 31A physically contact the metal tube 21.

In the first embodiment, the plural concave regions DA include two tapered concave regions DA1 and six tapered concave regions DA2. Width L3 (see Fig. 3 through Fig. 5) of the tapered concave regions DA1 and the tapered concave regions DA2 becomes narrower from the first opening R21A of the metal tube 21 toward the second opening R21B of the metal tube 21 (i.e., in the X-axis positive direction). Namely, the width L3 at the negative electrode terminal 41 sides of the concave regions DA is wider than the width L3 at the positive electrode terminal 42 sides of the concave regions DA.

The lengths in the X-axis direction of the tapered concave regions DA1 are longer than the lengths in the X-axis direction of the tapered concave regions DA2. The two large concave regions DA1 and the six small concave regions DA2 are formed regularly with a predetermined interval therebetween in the Y-axis direction.

In the first embodiment, a first proportion is greater than a second proportion. The "first proportion" means the proportion of the total surface area of the plural concave regions DA at region R31A (see Fig. 5), which is at the first opening R21A side of the resin sheet 31A, with respect to the surface area of the region R31A. The "second proportion" means the proportion of the total surface area of plural concave regions DB at region R31B (see Fig. 5), which is at the second opening R21B side of the resin sheet 31A, with respect to the surface area of the region R31B. The "region R31A" means, of the region of the resin sheet 31A that faces the electrode main body 11, the region between edge E31A1 that is at the first opening R21A side, and position E31A2 that is apart from the edge E31A1 along the X-axis positive direction by a specific distance L4 (see Fig. 5) toward the second opening R21B side. The "region R31B" means, of the region of the resin sheet 31A that faces the electrode main body 11, the region between edge E31B 1 that is at the second opening R21A side, and position E31B2 that is apart from the edge E31B 1 along the X-axis negative direction by the specific distance L4 (see Fig. 5) toward the first opening R21A side. The specific distance L4 is a length that is one-tenth of entire length L5 (see Fig. 5) in the X-axis direction of the region of the resin sheet 31A that faces the electrode main body 11.

Materials of the resin sheet include known resins (thermoplastic resins, thermosetting resins and the like). The thermoplastic resin may be an elastomer.
As needed, the resin sheet may further contain a thermally-conductive filler. The material of the thermally-conductive filler is not particularly limited, and examples thereof include metal oxides (e.g., aluminum, silica and magnesium), metal nitrides (e.g., aluminum nitride, silicon nitride and boron nitride), synthetic diamond and silicon carbide.
As needed, the resin sheet may further contain a compounding agent. Examples of compounding agents are fillers such as glass fibers, carbon fibers and inorganic powders, heat stabilizers, oxidation inhibitors, pigments, weatherproofing agents, flame retardants, plasticizers, dispersants, lubricants, mold releasing agents, and antistatic agents.

### (1.1.3.2) Resin Filling Bodies

The resin filling bodies 32 prevent electrical contact between the electrode body 10 and the case 20.

The resin filling body 32 is filled between the first side surface S11C of the electrode main body 11 and the inner surface S213 of the third wall portion 213 of the case 20. The resin filling body 32 is filled between the second side surface S11D of the electrode main body 11 and the inner surface S214 of the fourth wall portion 214 of the case 20.

Examples of the material of the resin filling bodies are similar to those exemplified as the material of the resin sheets 31A. The material of the resin filling bodies may be the same as or may be different from the material of the resin sheets.
The higher the content of the thermally-conductive filler, the greater the tendency for the thermal conductivity to improve and the electrical insulating ability to deteriorate. The thermal conductivity of the resin filling bodies 32 may be higher than that of the resin sheets 31A, and the electrical insulating ability of the resin filling bodies 32 may be lower than that of the resin sheets 31A.

(1.1.4) Negative Electrode Terminal and Positive Electrode Terminal The negative electrode terminal 41 and the positive electrode terminal 42 are used in order to lead the electricity generated at the electrode body 10 out to the exterior of the battery 1A. Examples of the materials of the negative electrode terminal and the positive electrode terminal are metals (e.g., aluminum, stainless steel (SUS), and nickel).

### (1.1.5) Details of Electrode Body

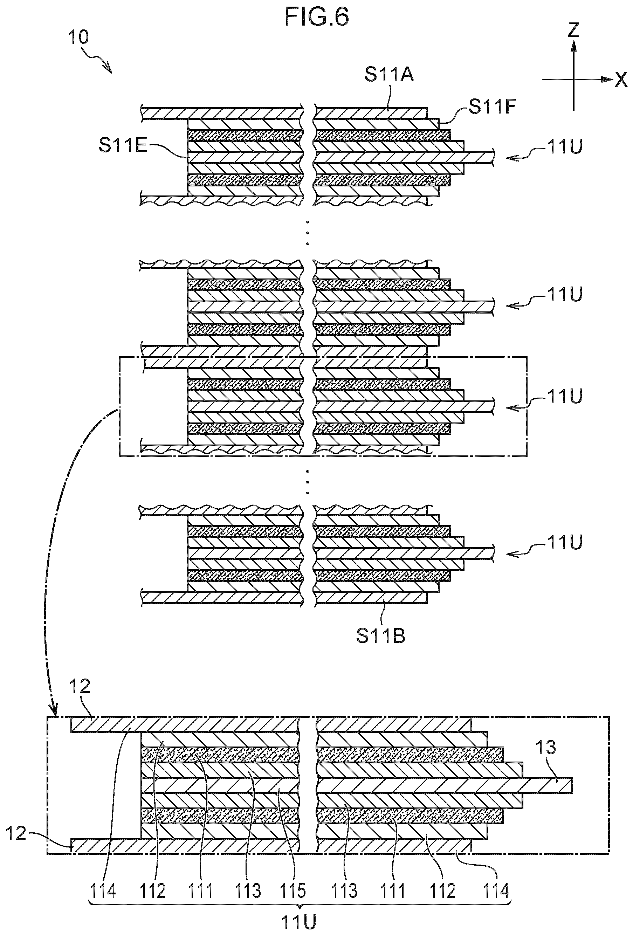

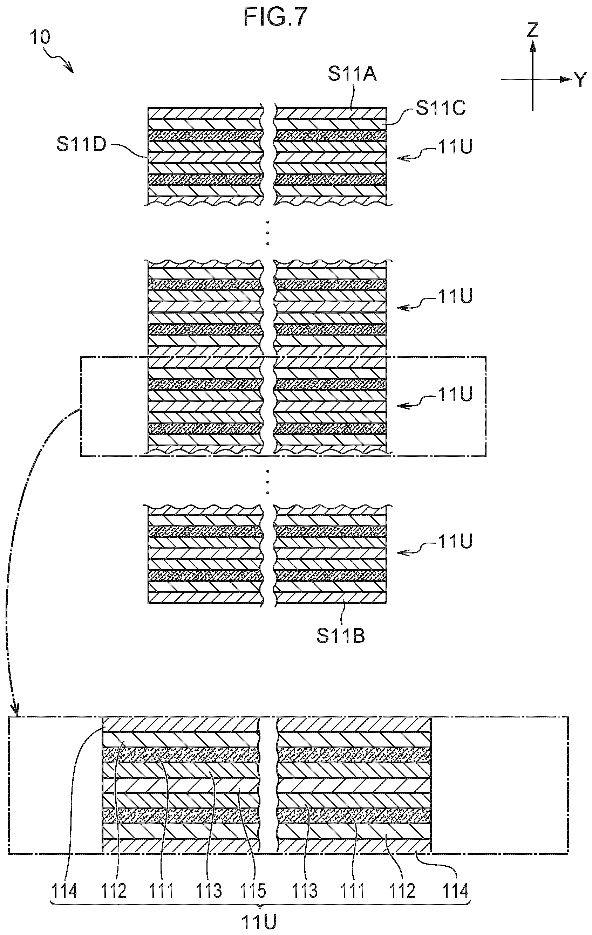

As illustrated in Fig. 2, the electrode body 10 has the electrode main body 11, the plural negative electrode current collector tabs 12 and the plural positive electrode current collector tabs 13. As illustrated in Fig. 6 and Fig. 7, the electrode main body 11 includes plural unit electrode main bodies 11U. The plural unit electrode main bodies 11U are stacked along the Z-axis direction. The plural unit electrode main bodies 11U are connected in parallel.

As illustrated in Fig. 6 and Fig. 7, the first side surface S11C, the second side surface S11D and the third side surface S11E of the electrode main body 11 are surfaces without steps (i.e., are flat surfaces). As illustrated in Fig. 6, the fourth side surface S11F of the electrode main body 11 is a surface that has steps in a tapered shape (i.e., is a stepped surface).

The layered structure of the unit electrode main body 11U is a monopolar structure. In detail, the unit electrode main body 11U has two solid electrolyte layers 111, two negative electrode active material layers 112, two positive electrode active material layers 113, two negative electrode current collectors 114, and one positive electrode current collector 115. The negative electrode current collector 114, the negative electrode active material layer 112, the solid electrolyte layer 111, the positive electrode active material layer 113, the positive electrode current collector 115, the positive electrode active material layer 113, the solid electrolyte layer 111, the negative electrode active material layer 112 and the negative electrode current collector 114 are layered in that order along the Z-axis direction.

One of the negative electrode current collector tabs 12 is connected to one of the negative electrode current collectors 114. One of the positive electrode current collector tabs 13 is connected to the one positive electrode current collector 115. The number of the negative electrode current collector tabs 12 of the electrode body 10 is greater than the number of the positive electrode current collector tabs 13 of the electrode body 10.

### (1.1.5.1) Solid Electrolyte Layers

The solid electrolyte layers 111 include a solid electrolyte. The solid electrolyte is not particularly limited, and may be an aggregate of plural particles. The solid electrolyte preferably contains one selected from the group consisting of sulfide solid electrolytes, oxide solid electrolytes and halide solid electrolytes. The solid electrolyte may be a known solid electrolyte.

The solid electrolyte layer may further contain a binder. The binder may be used to bind solid electrolytes together. The binder may be used to bind the solid electrolyte and the negative electrode active material layer 112 or the positive electrode active material layer 113. Examples of the binder are vinyl halide resins (e.g., polyvinylidene fluoride (PVdF)), rubbers (e.g., acrylate-butadiene rubber (ABR) and styrene-butadiene rubber (SBR)), and polyolefin resins (e.g., polyethylene (PE) and polypropylene (PP)).

### (1.1.5.2) Negative Electrode Active Material Layers

The negative electrode active material layers 112 contain a negative electrode active material. As needed, the negative electrode active material layers 112 may contain at least one of a solid electrolyte for a negative electrode, a conduction assistant and a binder.

Examples of the negative electrode active material are Li-based active materials (e.g., metallic lithium), carbon-based active materials (e.g., graphite), oxide-based active materials (e.g., lithium titanate), and Si-based active materials (e.g., elemental Si).

Examples of the solid electrolyte for a negative electrode are similar to those exemplified as the solid electrolyte contained in the solid electrolyte layers.

Examples of conduction assistants that can be used in the negative electrode active material layers are carbon materials (e.g., carbon black, carbon nanotubes, graphite and fluorocarbons), metal materials (e.g., aluminum powder, conductive whiskers), and conductive polymer materials (e.g., polyaniline, polypyrrole and polythiophene).

Examples of the binder that can be used in the negative electrode active material layers are similar to those exemplified as the binder contained in the solid electrolyte layers.

### (1.1.5.3) Positive Electrode Active Material Layers

The positive electrode active material layers 113 contain a positive electrode active material. As needed, the positive electrode active material layers 113 may contain at least one of a solid electrolyte for a positive electrode, a conduction assistant and a binder.

It is preferable that a lithium composite oxide be contained as the positive electrode active material. The lithium composite oxide may contain at least one type selected from the group consisting of F, Cl, N, S, Br and I. Further, the lithium composite oxide may have a crystal structure belonging to at least one space group selected from space groups R-3m, Immm, and P63-mmc. In the lithium composite oxide, the main sequence of a transition metal, oxygen and lithium may be an O2-type structure. The positive electrode active material may be a known positive electrode active material.

Examples of the solid electrolyte for a positive electrode are similar to those exemplified as the solid electrolytes for a negative electrode that can be used in the negative electrode active material layers.

Examples of the conduction assistant are similar to those exemplified as the conduction assistants that can be used in the negative electrode active material layers.

Examples of the binder are similar to those exemplified as the binders that can be used in the negative electrode active material layers.

### (1.1.5.4) Negative Electrode Current Collectors

The negative electrode current collectors 114 carry out power collection of the negative electrode active material layers 112. The material of the negative electrode current collectors is not particularly limited, and examples include stainless steel, aluminum, copper, nickel, iron, titanium, and carbon. The negative electrode current collectors may be copper foils. The form of the negative electrode current collectors is, for example, the form of a foil or the form of a mesh.

The negative electrode current collectors may be structures in which a shock-absorbing layer, an elastic layer or a PTC (Positive Temperature Coefficient) thermistor layer is disposed on the surface.

### (1.1.5.5) Positive Electrode Current Collectors

The positive electrode current collectors 115 carry out power collection of the positive electrode active material layers 113. The material of the positive electrode current collectors is not particularly limited, and examples include stainless steel, aluminum, copper, nickel, iron, titanium, and carbon. The positive electrode current collectors may be aluminum alloy foils or aluminum foils. The aluminum alloy foils or aluminum foils may be manufactured by using a powder. The form of the positive electrode current collectors is, for example, the form of a foil or the form of a mesh. The positive electrode current collectors may be structures in which a shock-absorbing layer, an elastic layer or a PTC (Positive Temperature Coefficient) thermistor layer is disposed on the surface.

### (1.1.5.6) Negative Electrode Current Collector Tabs

The negative electrode current collector tabs 12 electrically connect the negative electrode current collectors 114 and the negative electrode terminal 41. The negative electrode current collector tabs 12 are connected to the negative electrode current collectors 114. As illustrated in Fig. 2, the negative electrode current collector tabs 12 project out in the X-axis negative direction with respect to the third side surface S11E of the electrode main body 11. In detail, in the first embodiment, a bundle that includes the plural negative electrode current collector tabs 12 is electrically connected to the negative electrode terminal 41. The negative electrode current collector tabs 12 are preferably formed continuously from the negative electrode current collectors 114. The material of the negative electrode current collector tabs is not particularly limited, and may be a metal (e.g., aluminum, stainless steel (SUS) or nickel).

### (1.1.5.7) Positive Electrode Current Collector Tabs

The positive electrode current collector tabs 13 electrically connect the positive electrode current collectors 115 and the positive electrode terminal 42. The positive electrode current collector tabs 13 are connected to the positive electrode current collectors 115. As illustrated in Fig. 2, the positive electrode current collector tabs 13 project out in the X-axis positive direction with respect to the fourth side surface S11F of the electrode main body 11. In detail, in the first embodiment, a bundle that includes the plural positive electrode current collector tabs 13 is electrically connected to the positive electrode terminal 42. The positive electrode current collector tabs 13 are preferably formed continuously from the positive electrode current collectors 115. The material of the positive electrode current collector tabs is not particularly limited, and may be a metal (e.g., aluminum, stainless steel (SUS) or nickel).

### (1.1.6) Applications

Examples of applications of the battery 1A are the power source of electric equipment (e.g., vehicles, electronic equipment and electrical storage devices). Examples of vehicles are electric four-wheel vehicles, electric two-wheel vehicles, gasoline-powered vehicles, and diesel-powered vehicles. Examples of electric four-wheel vehicles are electric vehicles (BEVs), plug-in hybrid vehicles (PHEVs), and hybrid vehicles (BEVs). Examples of electric two-wheel vehicles are electric motorbikes and electrically assisted bicycles. Examples of electronic equipment are handheld devices (e.g., smartphones, tablet computers and audio players), portable devices (e.g., notebook computers and CD (compact disc) players), and mobile equipment (e.g., power tools and commercial video cameras). Thereamong, the battery 1A is preferably used as a power source for the driving of hybrid vehicles, plug-in hybrid vehicles, and electric vehicles.

### (1.2) Battery Manufacturing Method

The battery manufacturing method of the first embodiment is a method of manufacturing the battery 1A. This method includes a preparing step (A), an inserting step, a resin filling step, a terminal connecting step and a sealing step. The preparing step (A), the inserting step, the resin filling step, the terminal connecting step and the sealing step are carried out in that order.

### (1.2.1) Preparing Step (A)

In preparing step (A), an electrode body with resin sheets is prepared. The electrode body with resin sheets has the electrode body 10, and a pair of the resin sheets 3 1A mounted to the electrode body 10. The electrode body with resin sheets does not have the resin filling bodies 32.

The method of preparing the electrode body with resin sheets includes an electrode main body sheet preparing step, a cutting step, a collector tab connecting step, a layering step, a resin sheet preparing step (A) and a mounting step. The electrode main body sheet preparing step, the cutting step, the collector tab connecting step, the layering step and the mounting step are carried out in that order. The resin sheet preparing step (A) is carried out before the mounting step is carried out.

### (1.2.1.1) Unit Electrode Main Body Sheet Preparing Step

In the unit electrode main body sheet preparing step, a unit electrode main body sheet is prepared. The unit electrode main body sheet is similar to the unit electrode main body 11U except that the size thereof is different. In detail, the unit electrode main body sheet is formed by a negative electrode current collector sheet, a negative electrode active material layer sheet, a solid electrolyte layer sheet, a positive electrode active material layer sheet, a positive electrode current collector sheet, a positive electrode active material layer sheet, a solid electrolyte layer sheet, a negative electrode active material layer sheet and a negative electrode current collector sheet being layered in that order along the Z-axis direction. When viewing the unit electrode main body sheet from the Z-axis direction, the surface area of the negative electrode current collector sheet, the surface area of the negative electrode active material layer sheet, the surface area of the solid electrolyte layer sheet, the surface area of the positive electrode active material layer sheet and the surface area of the positive electrode current collector sheet increase in that order. The surface area of the positive electrode current collector sheet is the largest.

It suffices for the method of preparing the unit electrode main body sheet to be a known method.

### (1.2.1.2) Cutting Step

In the cutting step, three sides of the unit electrode main body sheet are cut. The unit electrode main body 11U is thereby obtained. The cut surfaces of the unit electrode main body 11U are the surfaces that do not have steps (i.e., the first side surface S11C, the second side surface S11D and the third side surface S11E). The surface of the unit electrode main body 11U that is not cut is the surface having steps in a tapered shape (i.e., the fourth side surface S11F).

It suffices for the cutting method to be a known method. A shearing tool (e.g., scissors or a round blade) may be used in the cutting method.

### (1.2.1.3) Connecting Step

In the connecting step, the negative electrode current collector tabs 12 are connected to the negative electrode current collectors 114 of the unit electrode main body 11U, and the positive electrode current collector tab 13 is connected to the positive electrode current collector 115 of the unit electrode main body 11U. The unit electrode main body 11U to which the negative electrode current collector tabs 12 and the positive electrode current collector tab 13 are connected (hereinafter also called "unit electrode main body with collector tabs") is thereby obtained.

It suffices for the method of connecting the negative electrode current collector tabs 12 and the positive electrode current collector tab 13 to be a known method.

### (1.2.1.4) Layering Step

In the layering step, the plural unit electrode main bodies with collector tabs are layered in that order along the Z-axis direction. The electrode body 10 is thereby obtained.

The layering method is not particularly limited, and it suffices for it to be a known method.

### (1.2.1.5) Resin Sheet Preparing Step (A)

In the resin sheet preparing step (A), the resin sheets 31A are prepared.

The method of preparing the resin sheets 31A is not particularly limited, and examples are a method of forming the plural concave regions DA in resin sheets whose both surfaces are flat, and injection molding. Examples of the method of forming the plural concave regions DA in resin sheets whose both surfaces are flat are cutting, groove forming or hole forming by laser machining, and punching by a die.

### (1.2.1.6) Mounting Step

In the mounting step, the resin sheets 31A are mounted to the first main surface S11A and the second main surface S11B of the electrode body 10 respectively. An electrode body with resin sheets is thereby obtained.

The method of mounting the resin sheets 31A is not particularly limited, and it suffices for it to be a known method.

### (1.2.2) Inserting Step

In the inserting step, the electrode body with the resin sheets is inserted into the first opening R21A of the metal tube 21 from the positive electrode current collector tab 13 side, and is placed at the interior of the metal tube 21. A first incomplete battery is thereby obtained.

The method of inserting the electrode body with the resin sheets is not particularly limited, and it suffices for it to be a known method.

### (1.2.3) Resin Filling Step

In the resin filling step, the uncured material of the resin filling bodies 32 is filled into gaps between the electrode main body 11 and the metal tube 21 of the first incomplete battery, and the resin filling bodies 32 are formed. In detail, the uncured material of the resin filling bodies 32 is filled into the gap between the first side surface S11C of the electrode main body 11 and the inner surface S213 of the third wall portion 213 of the metal tube 21, and into the gap between the second side surface S11D of the electrode main body 11 and the inner surface S214 of the fourth wall portion 214 of the case 20. A second incomplete battery is thereby obtained.

The method of filling the resin filling bodies 32 is not particularly limited, and it suffices for it to be a known method. The method of curing the uncured material of the resin filling bodies 32 is selected appropriately in accordance with the type of resin.

### (1.2.4) Terminal Connecting Step

In the terminal connecting step, the plural negative electrode current collector tabs 12 of the second incomplete battery and the negative electrode terminal 41 are connected, and the plural positive electrode current collector tabs 13 and the positive electrode terminal 42 are connected. In detail, in the first embodiment, a first bundle that includes the plural negative electrode current collector tabs 12 is formed, and the first bundle is electrically connected to the negative electrode terminal 41. Similarly, a second bundle that includes the plural positive electrode current collector tabs 13 is formed, and the second bundle is electrically connected to the positive electrode terminal 42. A third incomplete battery is thereby obtained.

The method of connecting is not particularly limited, and it suffices for it to be a known method.

### (1.2.5) Sealing Step

In the sealing step, the covers 22 and the electrically insulating bodies 23 are mounted to the first opening R21A and the second opening R21B of the metal tube 21 of the third incomplete battery respectively, and the electrode body 10 is sealed. The battery 1A is thereby obtained.

The method of sealing is not particularly limited, and it suffices for it to be a known method.

### (1.3) Operation and Effects

As described with reference to Fig. 1 through Fig. 7, the battery 1A has the electrode body 10, the case 20, and the resin body 30A. The case 20 has the metal tube 21 and the covers 22. The resin body 30A has the plural concave regions DA.

Due thereto, the plural concave regions DA are formed in regions of the resin sheets 31A which regions are near the plural negative electrode current collector tabs 12. Depending on the use of the battery 1A, there are cases in which it is more difficult for the negative electrode current collector tabs 12 to generate heat than the positive electrode current collector tabs 13. As a result, the battery 1A is a battery in which, in a battery in which the electrode body 10 and the case 20 are electrically insulated, the usage temperature difference at the interior of the electrode body 10 is small.

As described with reference to Fig. 1 through Fig. 7, at the battery 1A, the first proportion is larger than the second proportion.
Namely, it is easier for the heat of the region R31B at the second opening R21B side of the electrode body 10 to move to the metal tube 21 than the heat of the region R31A at the first opening R21A side of the electrode body 10. As a result, at the battery 1A, the cooling performance of the region at the second opening R21B side of the electrode body 10 is excellent.

As described with reference to Fig. 1 through Fig. 7, the plural concave regions DA include the tapered concave regions DA1, DA2.
Namely, it is easier for the heat of the region at the second opening R21B side of the electrode body 10 to move to the metal tube 21 than the heat of the region at the first opening R21A side of the electrode body 10. As a result, at the battery 1A, the cooling performance of the region at the second opening R21B side of the electrode body 10 is excellent.

As described with reference to Fig. 1 through Fig. 7, the electrode body 10 further has the plural negative electrode current collector tabs 12 and the plural positive electrode current collector tabs 13. The number of the negative electrode current collector tabs 12 is larger than the number of the positive electrode current collector tabs 13.
Depending on the use of the battery 1A, there are cases in which it is easier for the positive electrode current collector tabs 13 to generate heat than the negative electrode current collector tabs 12. At the battery 1A, the positive electrode current collector tabs 13 at which it is easy for heat to be generated are disposed at the second opening R21B side at which it is easy for heat to be transferred, and the negative electrode current collector tabs 12 at which it is difficult for heat to be generated are disposed at the first opening R21A side at which it is difficult for heat to be transferred. As a result, the battery 1A is a battery in which the usage temperature difference at the interior of the electrode body 10 is even smaller.

As described with reference to Fig. 1 through Fig. 7, the metal tube 21 has the plural convex portions C21 at the inner surface S212 of the metal tube 21.
Due thereto, it is easier for the resin body 30A to be fixed to the metal tube 21 than in a structure in which the metal tube 21 does not have the plural convex portions C21. As a result, at the battery 1A, the electrode body 10 is restrained by the metal tube 21.

As described with reference to Fig. 1 through Fig. 7, the resin body 30A includes the resin sheets 31A. The height L1 of the convex portions C21 is preferably less than or equal to 3/4 of the thickness L2 of the resin sheets 31A and greater than or equal to 10 µm. Due thereto, it is easier for the resin body 30A to be fixed to the metal tube 21 than in a structure in which the height L1 of the convex portions C21 is less than or equal to 3/4 of the thickness L2 of the resin sheets 31A and is not greater than or equal to 10 µm. As a result, in the battery 1A, the electrode body 10 is more strongly restrained by the metal tube 21.

As described with reference to Fig. 1 through Fig. 7, the battery manufacturing method of the first embodiment is a method of manufacturing the battery 1A. The resin body 30A includes the resin sheets 31A. This method includes a preparing step (A) and an inserting step.
The battery manufacturing method of the first embodiment can efficiently manufacture the battery 1A.

### (2) Second Embodiment

### (2.1) Battery

Battery 1B relating to the second embodiment is similar to the battery 1A relating to the first embodiment, except that the plural concave regions are formed irregularly at the battery 1B.

The battery 1B has the electrode body 10, the case 20, a resin body 30B, the negative electrode terminal 41 and the positive electrode terminal 42.

The resin body 30B has a pair of resin sheets 31B and the pair of resin filling bodies 32. The resin sheets 31B are similar to the resin sheets 31A except that the plural concave regions are formed irregularly in the resin sheets 31B.

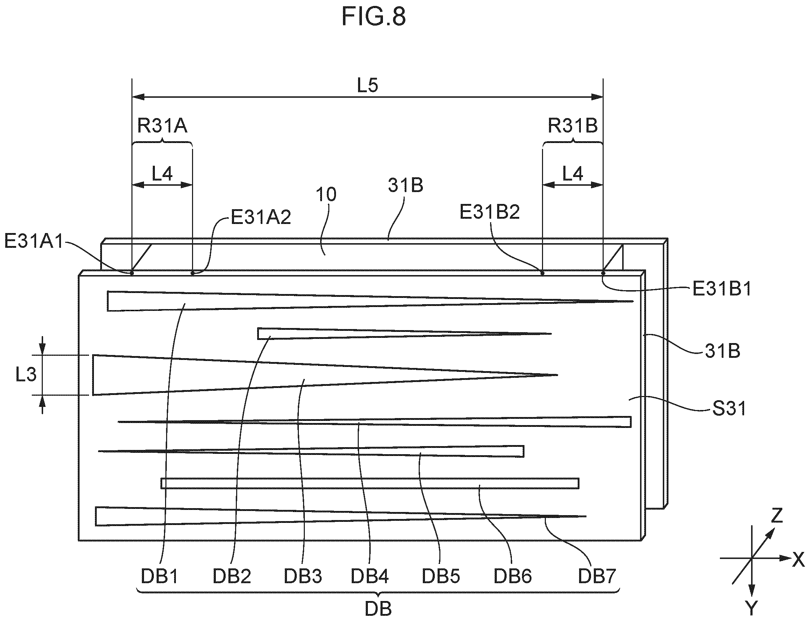

The resin sheets 31B are sheet-shaped objects. As illustrated in Fig. 8, the resin sheet 31B has plural concave regions DB in the surface S31 that physically contacts the metal tube 21. The plural concave regions DB extend from the first opening R21A of the metal tube 21 toward the second opening R21B of the metal tube 21 (i.e., in the X-axis positive direction). The plural concave regions DB do not physically contact the metal tube 21.

The regions of the resin sheet 31B that are not the plural concave regions DB are flat regions. The flat regions of the resin sheet 31B physically contact the metal tube 21.

In the second embodiment, the plural concave regions DB include tapered concave regions DB1 through DB3 and DB7, wide-end concave regions DB4, DB5, and a constant-width concave region DB6. The width L3 of the tapered concave regions DB1 through DB3 and DB7 becomes narrower in the X-axis positive direction. The width L3 of the wide-end concave regions DB4, DB5 becomes wider in the X-axis positive direction. The width L3 of the constant-width concave region DB6 is constant in the X-axis positive direction.

The respective lengths of the plural concave regions DB in the X-axis direction are different. The respective lengths of the plural concave regions DB in the X-axis direction are formed regularly along the Y-axis direction.

In the second embodiment, a first proportion is greater than a second proportion. The "first proportion" means the proportion of the total surface area of the plural concave regions DB at the region R31A, which is at the first opening R21A side of the resin sheet 31B, with respect to the surface area of the region R31A. The "second proportion" means the proportion of the total surface area of the plural concave regions DB at the region R31B, which is at the second opening R21B side of the resin sheet 31B, with respect to the surface area of the region R31B. The "region R31A" means, of the region of the resin sheet 31B that faces the electrode main body 11, the region between the edge E31A1 that is at the first opening R21A side, and the position E31A2 that is apart from the edge E31A1 along the X-axis positive direction by the specific distance L4 (see Fig. 8) toward the second opening R21B side. The "region R31B" means, of the region of the resin sheet 31B that faces the electrode main body 11, the region between the edge E31B 1 that is at the second opening R21A side, and the position E31B2 that is apart from the edge E31B1 along the X-axis negative direction by the specific distance L4 (see Fig. 8) toward the first opening R21A side. The specific distance L4 means a length that is one-tenth of the entire length L5 (see Fig. 8) in the X-axis direction of the region, which faces the electrode main body 11, of the resin sheet 31B.

### (2.2) Battery Manufacturing Method

The battery manufacturing method of the second embodiment is a method of manufacturing the battery 1B. This method includes a preparing step (B), an inserting step, a resin filling step, a terminal connecting step and a sealing step. The preparing step (B), the inserting step, the resin filling step, the terminal connecting step and the sealing step are carried out in that order.

### (2.2.1) Preparing Step (B)

In preparing step (B), an electrode body with flat resin sheets is prepared. The electrode body with flat resin sheets has the electrode body 10, and a pair of flat resin sheets mounted to the electrode body 10. The flat resin sheets are similar to the resin sheets 31B, except that they do not have the plural concave regions DB. The electrode body with flat resin sheets does not have the resin filling bodies 32.

The method of preparing the electrode body with flat resin sheets includes an electrode main body sheet preparing step, a cutting step, a collector tab connecting step, a layering step, a resin sheet preparing step (B) and a mounting step. The method of preparing the electrode body with flat resin sheets is similar to the method of preparing the electrode body with resin sheets of the first embodiment, except that the resin sheet preparing step (A) is changed to the resin sheet preparing step (B).

### (2.2.1.1) Resin Sheet Preparing Step (B)

Flat resin sheets are prepared in the resin sheet preparing step (B).

It suffices for the method of preparing the flat resin sheets to be a known method.

### (2.2.2) Inserting Step

In the inserting step, the electrode body with flat resin sheets is inserted into the first opening R21A of the metal tube 21 from the positive electrode current collector tab 13 side, and is placed at the interior of the metal tube 21. In the second embodiment, when the electrode body with flat resin sheets is inserted into the metal tube 21, the flat resin sheets and the metal tube 21 physically contact one another. Due thereto, the plural concave regions DB are formed in the flat resin sheets. As a result, a first incomplete battery is obtained.

The method of inserting the electrode body with a resin body is not particularly limited, and it suffices for it to be a known method.

### (2.2.3) Resin Filling Step

The resin filling step of the second embodiment is carried out similarly to the resin filling step of the first embodiment.

### (2.2.4) Terminal Connecting Step

The terminal connecting step of the second embodiment is carried out similarly to the terminal connecting step of the first embodiment.

### (2.2.5) Sealing Step

The sealing step of the second embodiment is carried out similarly to the sealing step of the first embodiment.

### (2.3) Operation and Effects

The battery 1B is similar to the battery 1A other than the fact that the plural concave regions DA are changed to the plural concave regions DB. Therefore, the battery 1B exhibits operation and effects that are similar to those of the battery 1A.

### (3) Modified Examples

In the first embodiment and the second embodiment, the first proportion is greater than the second proportion. However, the present disclosure is not limited to this, and the first proportion may be the same as the second proportion or may be smaller than the second proportion.

In the first embodiment and the second embodiment, the plural concave regions DA, DB include the tapered concave regions DA1, DA2, DB1 through DB3 and DB7, but the present disclosure is not limited to this. The plural concave regions do not have to include tapered concave regions. The numbers, sizes and shapes of the concave regions are not particularly limited, and are appropriately selected in accordance with the structure of the battery and the like.

In the first embodiment and the second embodiment, the number of the negative electrode current collector tabs 12 is greater than the number of the positive electrode current collector tabs 13, but the present disclosure is not limited to this. The number of the negative electrode current collector tabs 12 may be the same as the number of the positive electrode current collector tabs 13 or may be less than the number of the positive electrode current collector tabs 13.

In the first embodiment and the second embodiment, the metal tube 21 has the plural convex portions C21 at the inner surface S212 thereof, but the present disclosure is not limited to this. The metal tube 21 does not have to have the plural convex portions C21. The metal tube 21 may further have the plural convex portions C21 at at least one of the inner surface S211, the inner surface S213 and the inner surface S214, in addition to the inner surface S212.

In the first embodiment and the second embodiment, the height L1 of the convex portions C21 is preferably less than or equal to 3/4 of the thickness L2 of the resin sheets 31A and greater than or equal to 10 µm. However, the present disclosure is not limited to this. The height L1 of the convex portions C21 does not have to be less than or equal to 3/4 of the thickness L2 of the resin sheets 31A. The height L1 of the convex portions C21 does not have to be greater than or equal to 10 µm.

In the first embodiment and the second embodiment, the electrolytes of the batteries 1A, 1B are solid electrolytes, but the present disclosure is not limited to this. The electrolyte may be a non-aqueous electrolyte liquid containing a lithium salt (e.g., LiPF6), a non-aqueous gel electrolyte liquid, an ion-conductive polymer or the like. In a case in which the electrolyte is not a solid electrolyte, it suffices for the structure of the electrode body to be a known structure corresponding to the type of the electrolyte.

In the first embodiment and the second embodiment, the resin bodies 30A, 30B have the pair of resin sheets 31A, 31B and the pair of resin filling bodies 32. However, the present disclosure is not limited to this. The resin body may be formed from a resin sheet. In a case in which the resin body is formed from a resin sheet, all of the surfaces of the electrode body do not have to be covered by the resin sheet.

In the first embodiment and second embodiment, the size of the resin sheets 31A, 31B is greater than the respective sizes of the first main surface S11A and the second main surface S11B of the electrode main body 11. However, the present disclosure is not limited to this. The size of the resin sheets 31A, 31B may be the same as the respective sizes of the first main surface S11A and the second main surface S11B of the electrode main body 11. Regions of the resin sheets 31A, 31B that jut out from the first main surface S11A and the second main surface S11B may be bent so as to cover at least portions of the third side surface 11E and the fourth side surface 11F of the electrode main body 11.

Although the electrode body 10 includes the plural unit electrode main bodies 11U in the first embodiment and the second embodiment, the present disclosure is not limited to this. The electrode body 10 may be formed from one unit electrode main body 11U.

In the first embodiment and the second embodiment, the unit electrode main body 11U is formed by the negative electrode current collector 114, the negative electrode active material layer 112, the solid electrolyte layer 111, the positive electrode active material layer 113, the positive electrode current collector 115, the positive electrode active material layer 113, the solid electrolyte layer 111, the negative electrode active material layer 112 and the negative electrode current collector 114 being layered in that order along the Z-axis direction. However, the present disclosure is not limited to this. The unit electrode main body 11U may be formed by the negative electrode current collector 114, the negative electrode active material layer 112, the solid electrolyte layer 111, the positive electrode active material layer 113 and the positive electrode current collector 115 being layered in that order along the Z-axis direction. The unit electrode main body 11U may be formed by the positive electrode current collector 115, the positive electrode active material layer 113, the solid electrolyte layer 111, the negative electrode active material layer 112, the negative electrode current collector 114, the negative electrode active material layer 112, the solid electrolyte layer 111, the positive electrode active material layer 113 and the positive electrode current collector 115 being layered in that order along the Z-axis direction.

Although the metal tube 21 is a metal container that is formed in a rectangular shape in the first embodiment and the second embodiment, the present disclosure is not limited to this. The metal tube may be a metal container that is in the form of a cylindrical tube.

In the first embodiment and the second embodiment, the negative electrode current collector 114 and the negative electrode current collector tab 12 are separate bodies, and the positive electrode current collector 115 and the positive electrode current collector tab 13 are separate bodies. However, the present disclosure is not limited to this. The negative electrode current collector 114 and the negative electrode current collector tab 12 may be an integral body. The positive electrode current collector 115 and the positive electrode current collector tab 13 may be an integral body.

In the first embodiment and second embodiment, the layered structure of the electrode main body 11 is a structure in which the plural unit electrode main bodies 11U that have monopolar structures are connected in parallel. However, the present disclosure is not limited to this. The layered structure of the electrode main body may be a structure in which plural unit electrode bodies that have monopolar structures are connected in series (hereinafter also called "monopolar series structure"). In a monopolar series structure, the electrode body has conductors that electrically connect the negative electrode current collectors 114 and the positive electrode current collectors 115, and does not have bundles containing the plural negative electrode current collector tabs 12 or the plural positive electrode current collector tabs 13. The layered structure of the electrode main body may be a structure in which plural unit electrode bodies having bipolar structures are connected in series.

## Claims

1. A battery, comprising:
an electrode body including a positive electrode current collector, a positive electrode active material layer, an electrolyte, a negative electrode active material layer and a negative electrode current collector;
a case accommodating the electrode body; and
a resin body electrically insulating the electrode body and the case,
wherein:
the case includes a metal tube having a first opening and a second opening, and covers that close the first opening and the second opening respectively, and
the resin body includes a plurality of concave regions extending from the first opening toward the second opening.

2. The battery of claim 1, wherein:
a first proportion is greater than a second proportion,
the first proportion is a proportion of a total surface area of the plurality of concave regions at a region of the resin body which is at a first opening side, with respect to a surface area of the region at the first opening side, and
the second proportion is a proportion of a total surface area of the plurality of concave regions at a region of the resin body which is at a second opening side, with respect to a surface area of the region at the second opening side.

3. The battery of claim 1, wherein the plurality of concave regions include tapered concave regions having widths that become narrower from the first opening toward the second opening.

4. The battery of claim 1 or claim 2, wherein the electrode body further includes:
a plurality of negative electrode current collector tabs electrically connected to the negative electrode current collector and extending toward the first opening side, and
a plurality of positive electrode current collector tabs electrically connected to the positive electrode current collector and extending toward the second opening side, and
a number of the negative electrode current collector tabs is greater than a number of the positive electrode current collector tabs.

5. The battery of claim 1, wherein the metal tube includes, at an inner surface of the metal tube, a plurality of convex portions contacting the resin body.

6. The battery of claim 5, wherein:
the resin body includes a resin sheet having the plurality of concave regions, and
a height of the convex portions is less than or equal to 3/4 of a thickness of the resin sheet and is greater than or equal to 10 µm.

7. A method of manufacturing the battery of claim 4, wherein:
the resin body includes a resin sheet having the plurality of concave regions, and
the method comprises:
preparing an electrode body with a resin sheet, which has the electrode body and the resin sheet mounted to the electrode body; and
inserting the electrode body with a resin sheet into the first opening of the metal tube from a positive electrode current collector tab side, and placing the electrode body with a resin sheet at an interior of the metal tube.
